# EUROPÄISCHE PATENTSCHRIFT

(11) **EP 4 140 807 B1**
(45) Veröffentlichungstag und Bekanntmachung des Hinweises auf die Patenterteilung: **12.06.2024**
(21) Anmeldenummer: 22193062.1
(22) Anmeldetag: 31.08.2022
(51) Int. Cl.: B60P 1/28, B60R 13/01, B32B 3/10, B32B 3/16, B32B 5/02, B32B 5/06, B32B 5/26, B60J 7/10, B60P 7/04

(54) **THERMISCH-ISOLIERENDE PLANE FÜR NUTZFAHRZEUGE UND WECHSELBRÜCKEN SOWIE VERFAHREN ZU DEREN HERSTELLUNG**
THERMALLY INSULATING TARPAULIN FOR UTILITY VEHICLES AND CHANGING BRIDGES AND METHOD FOR ITS MANUFACTURE
BÂCHE THERMIQUEMENT ISOLANTE POUR VÉHICULES UTILITAIRES ET PONTS INTERCHANGEABLES AINSI QUE SON PROCÉDÉ DE FABRICATION

(30) Priorität: 31.08.2021 DE 102021122563
(43) Veröffentlichungstag der Anmeldung: 01.03.2023
(73) Patentinhaber: Paulus Textil GmbH, 08209 Auerbach (DE)
(72) Erfinder: GOLLE, Steffen, 08527 Plauen (DE)
(74) Vertreter: Heilein, Ernst-Peter

(56) Entgegenhaltungen:
- WO-A1-2006/092227
- WO-A1-2011/045136
- DE-C1- 19 754 238
- US-A1- 2016 144 804

## Beschreibung

Die vorliegende Erfindung betrifft eine thermisch isolierende Plane für Nutzfahrzeuge und Wechselbrücken, insbesondere für Mannschaftsfahrzeuge im Bereich Militär, Industrie, technische Hilfe und dergleichen sowie ein Verfahren zur Herstellung einer solchen Plane.

Im militärischen und/oder industriellen Bereich sowie im Katastrophenschutz müssen oftmals Personen in Nutzfahrzeugen bspw. auf den Ladepritschen von Lastkraftwagen (LKW) transportiert werden. Die Ladepritschen derartiger Nutzfahrzeuge sind zumeist aufgrund des geringen Gewichts und der vorteilhaften Materialflexibilität mit einer Plane aus einem Kunststoff-Gewebe-Verbundmaterial vor Witterungseinflüssen geschützt. Vorteile der Verwendung von Planen für den Witterungsschutz bestehen darüber hinaus in der einfachen und flexiblen Handhabung derartiger Planen für Laien sowie in breitgefächerten Verwendungsmöglichkeiten, nicht nur für Landfahrzeuge, sondern auch für Transportcontainer (= "Wechselbrücken") für einen kombinierten Straßen-, Bahn-, Flugzeug- und/oder Shiffstransport. Derartige Planen sind beispielsweise aus der WO 2011/045 136 A1, der DE197 54 238 C1 und der WO 2006/092 227 A1 bekannt.

Allerdings bieten derartige Planen, die eigentlich für den Witterungsschutz von Gütern ausgelegt sind, keinen ausreichenden Kälte- und/oder Wärmeschutz für, auf einer derartigen Ladepritsche transportierte, Personen.

Im Zusammenhang mit dem Transport von Gütern auf LKW ist aus der US 2016/014 48 04 A1 bereits eine wärmeisolierende, mehrlagige Plane bekannt, bei der eine äußere Planen-Schicht mit einer Vielzahl von Syntheseharz-Vliesstoffbahnen und einer abschließenden Schicht aus Segeltuch auf Polyesterbasis in dieser Reihenfolge laminiert sind. Die Segeltuchschicht weist dabei Löcher auf, die eine Belüftung der inneren Laminatschichten ermöglichen, so dass sich die Plane insbesondere bei Kontakt mit besonders heißen Gütern wie bspw. transportiertem heißem Asphalt, nicht nachteilig aufbläht. Eine derartige wärmeisolierende, mehrlagige Plane eignet sich zum vollständigen Einkleiden von Ladepritschen bzw. zur Bildung eines wärmeisolierenden Gehäuses im Ladebereich eines LKW, wobei eine derartige mehrlagige Plane, wenn sie auf einem Spriegel, also einer Unterkonstruktion zur Halterung von Planen auf der Ladefläche eines LKW, angeordnet wird, nach außen hin einen größeren Platzbedarf hat, als gewöhnliche LKW-Planen.

Im militärischen Bereich und im Katastrophenschutz (THW) umfassen die Innenräume von Nutzfahrzeugen oftmals auch Zusatzausrüstung, welche über Haltevorrichtungen beispielsweise am Spriegel angeordnet sein und individuell von Fahrzeug zu Fahrzeug variieren kann. Dadurch entstehen freie Bereiche im Innenraum, deren Außenwand einer thermischen Isolierung bedarf und durch Ausrüstung und/oder Halterungen besetzte Bereiche, welche nicht nur keiner Isolierung bedürfen, da die entsprechenden Abschnitte sozusagen bereits baulich isoliert sind, sondern die bei einer Einkleidung mit einer mehrlagigen Plane, wie sie aus dem Stand der Technik bekannt ist, auch nachteilig zu einem, weiter nach außen gerichteten Platzbedarf der gesamten Ladepritsche führen. Zudem werden Nutzfahrzeuge in besagtem Verwendungsbereich oftmals aus einer Zugmaschine mit Transportanhänger bzw. aus einer Zugmaschine mit zusätzlichem Transportfahrgestell und darauf reversibel befestigbarem Transportcontainer ("Wechselbrücke") gebildet. Diese Aufbauweise ermöglicht vorteilhaft den sog. "kombinierten Verkehr". Allgemein wird unter dem Begriff "kombinierter Verkehr (KV)" ein (Güter)-Transport verstanden, an dem verschiedene Verkehrsträger beteiligt sind, ohne dass das Transportgut beim Wechsel seinen Transportbehälter verlässt. Es wird also nicht das eigentliche Transportgut umgeladen, sondern der jeweilige Transportbehälter. Eine andere Bezeichnung dafür ist auch "intermodaler Verkehr". Für besagten kombinierten Verkehr, also den Transport eines Transportcontainers auf Straße, Bahn, in der Luft und/oder auf Wasserwegen, bei dem für die verwendeten Nutzfahrzeuge bzw. die besagten Transportcontainer Normen bezüglich der Aufbaugrößen eingehalten werden müssen, werden solche konventionell ausgestalteten LKW-Planen des Standes der Technik den Anforderungen an eine spezifische Anpassbarkeit an den jeweiligen Verwendungszweck bei gleichzeitiger Gewährleistung eines nach außen hin geringen, den Normen entsprechenden Platzbedarfs nicht gerecht.

Hiervon ausgehend liegt der vorliegenden Erfindung die Aufgabe zugrunde, eine gegenüber dem Stand der Technik verbesserte thermisch-isolierende Plane für Nutzfahrzeuge und Wechselbrücken, insbesondere für Mannschaftsfahrzeuge im Bereich Militär, Industrie, technische Hilfe und dergleichen, bereitzustellen, welche auf den jeweiligen konkreten Einsatzzweck individuell angepasst ist. Darüber hinaus soll ein Verfahren bereitgestellt werden, welches die Herstellung von, auf den jeweiligen konkreten Einsatzzweck angepassten, thermisch-isolierenden Planen ermöglicht, welche die Einkleidung eines Ladebereichs bzw. einer Ladepritsche eines Nutzfahrzeugs mit Spriegelaufbau bzw. einer Wechselbrücke ermöglichen, wobei nach außen hin kein weiterer Platzbedarf entsteht, so dass alle Normen für die Außenmaße des entsprechenden Nutzfahrzeugs eingehalten werden können. Besagter Spriegelaufbau kann dabei sowohl Querspriegel (quer zur Transportachse) als auch Längsspriegel (parallel zur Transportachse), wie beim gängigen "Hamburger Verdeck", aufweisen. Gleichzeitig sollen die mittels des erfindungsgemäßen Verfahrens hergestellten thermisch-isolierenden Planen weiterhin die Vorteile von konventionellen Vollplanen für Nutzfahrzeuge, wie geringes Gewicht, hohe Flexibilität, schnelles Öffnen und Schließen der Ladefläche, Witterungsschutz sowie leichtes Handling für Laien aufweisen.

Diese Aufgabe wird zunächst durch eine thermisch-isolierende Plane mit den Merkmalen des unabhängigen Anspruchs 1 gelöst.

Die erfindungsgemäße thermisch-isolierende Plane zeichnet sich gegenüber gattungsbildenden Planen dadurch aus, dass an einer Innenseite der Plane eine Vielzahl von individuell gestalteten Isolierelementen angeordnet ist, wobei die Isolierelemente aus wenigstens einem Vliesstück und aus wenigstens einem, korrespondierend zum jeweiligen Vliesstück ausgebildeten Gewebestück gebildet sind, wobei das Vliesstück und das Gewebestück über jeweils eine ihrer Seiten miteinander flächig in Kontakt sind, sodass das Isolierelement eine Vliesseite und eine Außenseite aufweist, und wobei das Isolierelement mit seiner Vliesseite in unmittelbarem Kontakt mit der Innenseite der Plane ist. Das Gewebestück eines jeden Isolierelements weist dabei einen zwischen 3 und 15 % größeren Flächeninhalt als das jeweils korrespondierende Vliesstück auf, sodass sich, wenn das Vliesstück mittig auf dem jeweils korrespondierenden Gewebestück platziert wird, ein umlaufender, überstehender Rand aus Gewebematerial bildet, über den das jeweilige Isolierelement mit der Innenseite der Plane stoffschlüssig verbunden ist. Die Position eines jeden Isolierelements auf der Innenseite und die Gestalt eines jeden Isolierelements ist zudem erfindungsgemäß anhand eines zweidimensionalen Plans (2D-Plan) für die Positionierung und Gestalt für, auf der Innenseite der Plane angeordnete, Isolierelemente bestimmt, wobei der 2D-Plan auf Basis eines dreidimensionalen Modells (3D-Modell) des Inneren eines Laderaums des jeweiligen Nutzfahrzeugs erstellt ist, und wobei zwischen den Isolierelementen Faltbereiche ausgebildet sind, mittels derer die Plane planmäßig faltbar ist.

Die Anordnung einer Vielzahl von individuell gestalteten Isolierelementen auf der Innenseite einer Plane ermöglicht vorteilhaft eine thermische Isolierung aller Bereiche der Plane, welche nicht in direkten Kontakt mit Teilen des Spriegelgestells und/oder mit Teilen der Innenausstattung des Laderaumes eines Nutzfahrzeugs, wie bspw. verschiedene Halterungen, Sitzbänke, Regale, etc., kommen. Ein erfindungsgemäßer 2D-Plan kann dabei vorzugsweise jeweils Positionsparameter in Form von Koordinaten bezüglich eines, durch die jeweilige Innenseite der zu isolierenden Plane vorgegebenen Koordinatensystems, sowie Gestaltsparameter für die einzelnen Isolierelemente, insbesondere in Form von Höhen-, Breiten-, bzw. Winkelangaben (bei nicht rechteckigen Formen), umfassen.

Auf diese Weise kann der Laderaum bzw. die Wechselbrücke vorteilhaft gegen Hitze und Kälte isoliert werden, ohne dass sich die Außenmaße des jeweiligen Nutzfahrzeugs durch eine auskragende Plane derart vergrößern, dass entsprechende (Gesetzes- und/oder Norm-)Vorgaben nicht mehr eingehalten werden. Darüber hinaus behält die erfindungsgemäße Plane aufgrund der, durch Faltbereiche voneinander getrennt auf der Innenseite angeordneten Isolierelemente vorteilhaft die Flexibilität und die gute und einfache Handhabbarkeit einer konventionellen, unisolierten LKW-Plane - sowohl bei der Benutzung beispielsweise beim Öffnen und Schließen sowie beim Auf- und Abrollen der Plane als auch bei der Lagerung der unbenutzten Plane, bei.

Die erfindungsgemäß gebildeten Isolierelemente ermöglichen vorteilhaft eine materialsparende Isolierung der zu isolierenden Innenseite einer Plane, da die Plane selbst als eine Außenseite eines aus Gewebestück, korrespondierendem Vliesstück und des durch besagtes Isolierelement bedeckten Planen-Abschnitts gebildeten "Isolierkissens" fungiert, und damit sozusagen eine Seite eines "Isolierkissens" eingespart werden kann. Isolierelemente, welche aus mehr als einem Vliesstück und mehr als einem, zum jeweiligen Vliesstück korrespondierend ausgebildeten Gewebestück gebildet sind, können vorteilhaft die mechanische Stabilität der Plane sowie deren Wärmedämmungs- und/oder Schallabsorptionseigenschaften weiter verbessern, wodurch derartige Planen insbesondere auch als Trennwand im Inneren des Laderaums eingesetzt werden können. Erfindungsgemäß gebildete Isolierelemente können darüber hinaus vorteilhaft über ihren jeweiligen Rand aus Gewebematerial mittels Kleben, Hochfrequenz- und/oder Heißluftschweißen mit der Innenseite der Plane - vorzugsweise umlaufend, also entlang des gesamten Randes aus Gewebematerial - stoffschlüssig und somit wasserdicht verbunden werden.

Unterschiedlich gestaltete, "individuelle" Isolierelemente tragen vorteilhaft der individuellen Ausgestaltung des Laderaums verschiedener Nutzfahrzeuge Rechnung. Durch unterschiedlich ausgestaltete Isolierelemente, insbesondere in polygonalen Ausgestaltungen mit konvexen oder konkaven Bereichen, lassen sich die zu isolierenden Bereiche der Innenseite effektiv - im Sinne einer Parkettierung - mit Isolierelementen bedecken.

Weitere vorteilhafte Ausgestaltungen und Weiterbildungen, welche einzeln oder in Kombination miteinander einsetzbar sind, sind Gegenstand der abhängigen Ansprüche.

In einer ersten bevorzugten Ausgestaltung der Erfindung hat es sich bewährt, wenn die die Ränder der Gewebestücke einander benachbarte Isolierelemente um 2,5 cm bis 3,5 cm, bevorzugt um 3,0 cm miteinander überlappen. Durch besagte Überlappung kann die stoffschlüssige Verbindung zwischen den Isolierelementen und der Innenseite der Plane vorteilhaft verstärkt und die Lücke zwischen den Vliesstücken benachbarter Isolierelemente vorteilhaft minimiert werden.

Darüber hinaus ist es von Vorteil, wenn das Vliesstück aus einem thermisch-isolierenden Vlies, insbesondere aus einem schwer entflammbaren, feinfaserigen Polyestervlies gebildet ist, wobei das Vliesstück vorzugsweise eine Dicke von 10 bis 40 mm, besonders bevorzugt von 20 mm, aufweist. Ein derartiges Vlies bietet vorteilhaft bereits bei vergleichsweise geringen Dicken, hohe Dämmwerte. Dadurch bleiben die erfindungsgemäß gebildeten Isolierelemente vorteilhaft leicht und erfüllen zudem die gesetzlichen Brandschutzvorgaben.

In einer weiteren Ausgestaltung hat es sich schließlich bewährt, wenn das Gewebestück aus einem Kunststoff-beschichteten Gewebematerial, insbesondere aus einem mit Polyvinylchlorid (PVC)-beschichteten Polyestergewebe, gebildet ist. Kunststoff-beschichtetes Gewebematerial, insbesondere aus einem mit Polyvinylchlorid (PVC)-beschichteten Polyestergewebe, weist vorteilhaft eine hohe Reißfestigkeit auf und ist ebenfalls schwer entflammbar.

Die vorliegende Erfindung löst die oben beschriebene Aufgabe auch durch ein Verfahren zur Herstellung einer thermisch-isolierenden Plane wie zuvor beschrieben, mit den Merkmalen des unabhängigen Patentanspruchs 5.

Das erfindungsgemäße Verfahren zeichnet sich dadurch aus, dass
- eine Vielzahl von Isolierelementen auf einer Innenseite der Plane angeordnet werden,
   - wobei sowohl die Positionierung eines jeden Isolierelements auf der Innenseite der Plane als auch
   - die Auswahl der Gestalt und entsprechende Herstellung der einzelnen Isolierelemente,
- anhand eines zweidimensionalen Plans (2D-Plan) für die Positionierung und Gestalt für, auf einer Innenseite einer Plane angeordnete, Isolierelemente erfolgt,
- welcher anhand eines dreidimensionalen Modells (3D-Modell) des Inneren eines Laderaums eines Nutzfahrzeugs aufgestellt wird;
- und wobei die Isolierelemente derart auf der Innenseite der Plane positioniert werden, dass zwischen den einzelnen Isolierelementen Faltbereiche gebildet werden.

Ein derartiges Verfahren ermöglicht es vorteilhaft, eine thermisch-isolierende Plane für Nutzfahrzeuge und Wechselbrücken herzustellen, welche den Laderaum des jeweiligen Nutzfahrzeugs dadurch optimal nach außen hin thermisch isoliert, dass diejenigen Bereiche auf der Innenseite der Plane, welche durch den Spriegel des jeweiligen Nutzfahrzeugs und/oder durch Halterungen und Zubehör des Nutzfahrzeugs im Inneren nahe der Wände des Laderaums baulich bedeckt sind, individuell und passgenau von der Bedeckung mit Isolierelementen ausgespart bleiben. Die thermische Isolierung des Laderaums bleibt durch die individuell und passgenau gestaltete Plane vorteilhaft gewährleistet. Gleichzeitig weist die erfindungsgemäße Plane jedoch in den Bereichen, in denen bauliche Besonderheiten im Laderaum eine konventionelle mehrlagige, thermisch-isolierende Plane nach außen drücken würden, vergleichsweise dünne Abschnitte, insbesondere auch Faltbereiche, auf, wodurch sich die Plane vorteilhaft an das Spriegelgestell und an die individuelle Innenausstattung des jeweiligen Nutzfahrzeugs vergleichsweise wenig auskragend anlegt. Das Vorsehen von einer Vielzahl von Isolierelementen an der Innenseite der Plane, welche durch Faltbereiche voneinander getrennt sind, erhöht darüber hinaus die Flexibilität und leichte Handhabbarkeit der erfindungsgemäßen Plane, insbesondere im Vergleich zu vollflächig isolierten Planen des Standes der Technik.

Besonders bevorzugt ist dabei, wenn in einem Verfahrensschritt vor der Anordnung der Isolierkissen auf der Innenseite der Plane, zunächst alle Modifikationen der Plane selbst, insbesondere Modifikationen der Außenseite der Plane, die Verarbeitungsschritte umfassen bei denen Hochfrequenzschweißtechniken und/oder Heißluft-Fügetechniken eingesetzt werden, ausgeführt werden. Vorbereitenden Verfahrensschritte dieser Art ermöglichen vorteilhaft insbesondere die Außenseite der Plane auch in den Bereichen beliebig zu modifizieren, die später mit auf der Innenseite mit Isolierelementen bestückt werden sollen und dabei vorteilhaft eine Beschädigung der Vliesstücke zu verhindern.

Darüber hinaus ist es von Vorteil, wenn die Innenseite der Plane in den Faltbereichen durch Vliesmaterial unbedeckt bleibt, wobei ein jeder Faltbereich bevorzugt mindestens 45 mm breit, besonders bevorzugt mindestens 50 mm breit ist. Dadurch wird die Biegsamkeit der Plane in den Faltbereichen vorteilhaft besonders hoch, da lediglich das Material der Plane selbst sowie der innenseitig angeordneten Gewebestücke gebogen werden muss.

In einer Ausgestaltung des erfindungsgemäßen Verfahrens zur Herstellung einer thermisch-isolierenden Plane für Nutzfahrzeuge und Wechselbrücken, insbesondere für Mannschaftsfahrzeuge im Bereich Militär, Industrie, technische Hilfe und dergleichen, hat sich bewährt, wenn zur Herstellung der Isolierelemente
- anhand des aufgestellten 2D-Plans passgenaue Vliesstücke aus einem thermisch-isolierenden Vlies geschnitten werden;
- anhand des aufgestellten 2D-Plans, korrespondierend zu den Vliesstücken ausgebildete, Gewebestücke aus einem Kunststoff-beschichteten Gewebematerial geschnitten werden;
- ein jedes der so erhaltenen Vliesstücke auf einer Seite des jeweils korrespondierend dazu ausgebildeten Gewebestücks mit Hilfe eines Fixiermittels fixiert wird;
- und jedes aneinander fixierte Paar aus Vliesstück und Gewebestück entlang wenigstens eines Teils eines Randes des jeweiligen Vliesstücks miteinander vernäht wird, so dass ein Isolierelement mit einer Vliesseite und einer Außenseite entsteht.

Auf diese Weise lassen sich vorteilhaft passgenaue, individuell geformte Isolierelemente bilden, wobei die Fixierung des Vliesstücks am jeweilig korrespondierend ausgebildeten Gewebestück mit Hilfe eines Fixiermittels vorteilhaft ein gegenseitiges Verrutschen verhindert und auf diese Weise den Vorgang des Vernähens vereinfacht. Im fertiggestellten Zustand der Plane können das Fixiermittel und/oder die Nahtverbindung dann zudem bei Gebrauch, insbesondere beim Aufrollen und Abrollen der Plane, auch ein Ab- oder Verrutschen des jeweiligen Vliesstücks, insbesondere dessen mittleren Teils, durch Einwirkung der Schwerkraft bzw. ausgelöst durch den Auf- und Abrollvorgang vorteilhaft verhindern.

Dabei ist es von Vorteil, wenn das Fixiermittel ein selbstklebendes Klettband und/oder ein doppelseitiges Klebeband ist, welches zur Fixierung des Vliesstücks auf einer Seite des jeweils korrespondierend dazu ausgebildeten Gewebestücks vorzugsweise in Form von mehreren Stücken von Fixiermittel, welche zunächst 9,0 cm bis 11,0 cm, besonders bevorzugt 10,0 cm von den Außenkanten des jeweiligen Gewebestücks entfernt und dann zur Mitte des Gewebestücks hin gleichmäßig verteilt auf der betreffenden Seite des Gewebestücks angeordnet werden. Die genannten Fixiermittel sind vorteilhaft besonders preiswert und einfach handhabbar. Die Positionierung mehrerer Fixiermittel in oben genannter Weise vermeidet vorteilhaft einen unerwünschten Faltenwurf des zu fixierenden Vliesstücks.

In einer weiteren Ausgestaltung des Verfahrens hat sich bewährt, wenn die Isolierelemente anhand des aufgestellten 2D-Plans auf der Innenseite der Plane positioniert werden, wobei die Isolierelemente mit ihrer Vliesseite in Kontakt mit der Innenseite der Plane treten. Die zuvor passgenau gefertigten Isolierelemente werden dabei vorteilhaft an dem für sie jeweils bestimmten Ort auf der Innenseite der Plane angeordnet, wodurch der zu isolierende Bereich bestmöglich abgedeckt werden kann. Der Kontakt zwischen Vliesseite und Innenseite der Plane erhöht verteilhaft die Dämmeigenschaften der Plane, da der Wärmeübertrag von Planen-Material zu Vliesmaterial vorteilhaft gering ist und die sich zwischen den Fasern des Vliesmaterials befindende Luft als zusätzlich thermisch-isolierendes Luftpolster fungieren kann.

Weiterhin hat sich bewährt, wenn in einem Verfahrensschritt, die Isolierelemente mit der Plane stoffschlüssig, insbesondere mittels Hochfrequenzschweißen und/oder einem Heißluft-Fügeverfahren oder durch Kleben, verbunden werden, wobei die Reihenfolge der stoffschlüssige Verbindung der Isolierelemente mit der Innenseite der Plane stets so erfolgt, dass Isolierelemente, die im Nutzungszustand einem Dach des Nutzfahrzeugs oder der Wechselbrücke näher sind, vor Isolierelementen, die einer Ladefläche des Nutzfahrzeugs oder der Wechselbrücke näher sind, stoffschlüssig mit der Innenseite der Plane verbunden werden. Eine derartige Vorgehensweise vereinfacht vorteilhaft die Bearbeitung, insbesondere das Anbringen von Kontrollmarkierungen, sowie die Handhabbarkeit der immer schwerer werdenden Plane. Eine stoffschlüssige Verbindung, insbesondere umlaufend, entlang des gesamten Rands aus Gewebemetrial und vorzugsweise durch Kleben und/oder Heißluftschweißen, ermöglicht vorteilhaft eine wasserdichte Verbindung des jeweiligen Isolierelements mit der Innenseite der Plane.

Dabei ist es von Vorteil, wenn ein jedes, anhand des aufgestellten 2D-Plans, korrespondierend zum jeweiligen Vliesstücken ausgebildeten, Gewebestücke derart aus einem Kunststoff-beschichteten Gewebematerial geschnitten wird, dass das Gewebestück einen größeren, vorzugsweise einen zwischen 3 und 15 % größeren, Flächeninhalt als das jeweils korrespondierende Vliesstück aufweist, sodass sich, wenn das Vliesstück mittig auf dem jeweils korrespondierenden Gewebestück platziert wird, ein umlaufender, überstehender Rand aus Gewebematerial bildet, entlang dessen das jeweilige Isolierelement mit der Plane stoffschlüssig verbunden werden kann.

In einer weiteren Ausgestaltung des Verfahrens, können schließlich in einem Verfahrensschritt, bei der Aufstellung des 2D-Plans, die zu isolierenden Bereiche auf der Innenseite der Plane derart in Teilbereiche mit Positionierungsparametern und Gestaltsparametern für die Isolierelemente aufgeteilt werden, so dass die von einem einzelnen Isolierelement bedeckte Fläche der Innenseite der Plane höchstens 40 %, bevorzugt höchstens 30 %, besonders bevorzugt höchstens 20 %, der Gesamtfläche der zu isolierenden Innenseite der Plane beträgt. Werden die einzelnen Isolierelemente in ihrer maximalen Größe begrenzt, kann vorteilhaft eine hohe Flexibilität der Plane dadurch aufrechterhalten werden, dass die zu isolierende Innenseite der Plane mit einer großen Zahl von kleineren Isolierelementen bedeckt wird, wobei die Randbereiche um die einzelnen Isolierelemente herum jeweils als Biegestellen dienen könne, welche die Flexibilität der Plane insgesamt vorteilhaft erhöhen.

Die erfindungsgemäße thermisch-isolierende Plane sowie das erfindungsgemäße Verfahren zur Herstellung einer solchen Plane ermöglichen es vorteilhaft Laderäume bzw. Ladepritschen von Nutzfahrzeugen bzw. Wechselbrücken, angepasst an den jeweiligen Verwendungszweck und die individuellen räumlichen Gegebenheiten im Inneren der Laderäume, thermisch zu isolieren. Dadurch werden Personen, welche in den Laderäumen bzw. auf den Ladepritschen transportiert werden, vorteilhaft vor Hitze, Kälte und anderen Witterungseinflüssen geschützt. Die thermisch-isolierende Plane selbst, gewährleistet dennoch alle Vorteile, wie Flexibilität und einfache Handhabung, gewöhnlicher LKW-Planen und bietet zudem den Vorteil, die Außenmaße eines derart isolierten Nutzfahrzeugs bzw. einer Wechselbrücke nicht wesentlich zu vergrößern.

Diese sowie zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit den beigefügten Zeichnungen beschrieben.

Darin zeigen schematisch:
- Fig. 1: eine erste Ausgestaltung einer erfindungsgemäßen Plane für die Seitenverkleidung eines Laderaums eines Nutzfahrzeugs und von Wechselbrücken mit Blick auf die Innenseite der Plane;
- Fig. 2: eine zweite Ausgestaltung einer erfindungsgemäßen Plane für die Verkleidung einer Frontseite des Laderaums mit Blick auf die Innenseite der Plane;
- Fig. 3: eine dritte Ausgestaltung einer erfindungsgemäßen Plane für die Verkleidung einer Heckseite des Laderaums mit Blick auf die Innenseite der Plane;
- Fig. 4a: einen Blick auf den Laderaum eines Nutzfahrzeugs mit einer individuell an besagten Laderaum angepassten, thermisch-isolierenden Plane in unmontiertem Zustand;
- Fig. 4b: einen Blick auf den Laderaum aus Fig. 4a mit der Plane in montiertem Zustand;
- Fig. 5a: eine perspektivische Ansicht eines als Transportcontainer ausgestalteten Laderaums eines Nutzfahrzeugs mit Längsspriegeln;
- Fig. 5b: eine Ausgestaltung einer, zu einer Hälfte einer Heckseite des Transportcontainers aus Fig. 5a passend ausgestalteten, erfindungsgemäßen Plane mit Blick auf die Innenseite der Plane;
- Fig. 5c: eine Ausgestaltung einer, zu einer Längsseite des Transportcontainers aus Fig. 5a passend ausgestalteten, erfindungsgemäßen Plane mit Blick auf die Innenseite der Plane; und
- Fig. 6a - 6c: verschiedene Zwischenschritte eines Verfahrens zur Herstellung einer erfindungsgemäßen Plane.

Bei der nachfolgenden Beschreibung bevorzugter Ausführungsformen der vorliegenden Erfindung bezeichnen gleiche Bezugszeichen gleiche oder vergleichbare Komponenten.

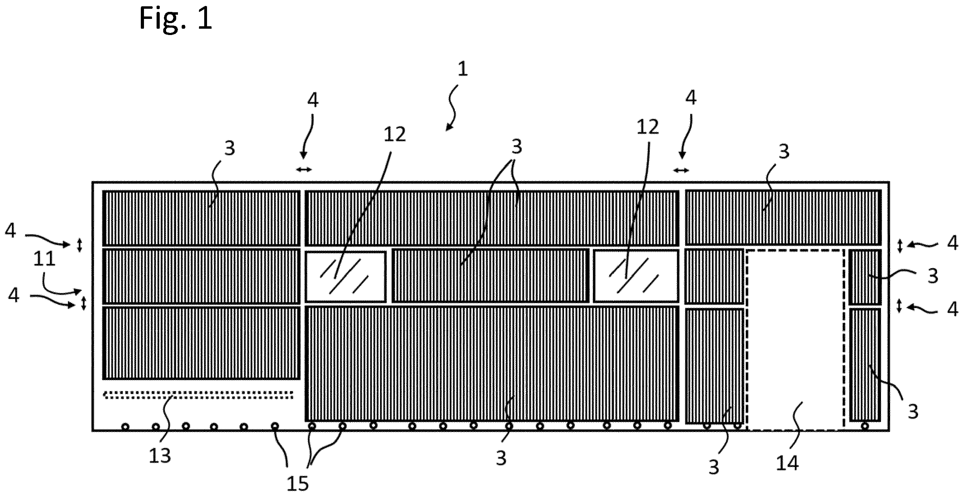

**Fig. 1** zeigt eine erste Ausgestaltung einer erfindungsgemäßen Plane 1 für die Seitenverkleidung eines Laderaums 21 eines Nutzfahrzeugs 2 und von Wechselbrücken mit Blick auf die Innenseite 11 der Plane 1.

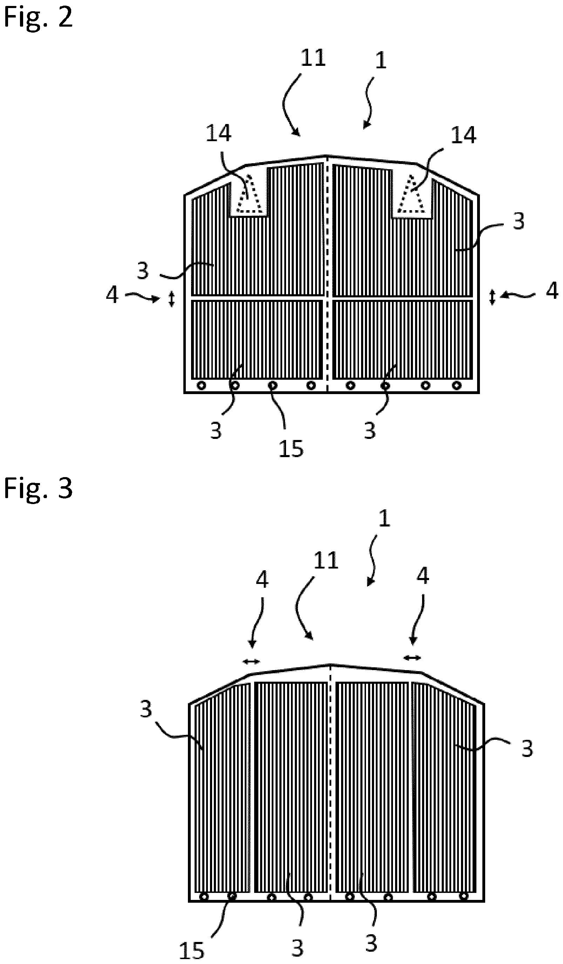

Die **Fig. 2** und **3** zeigen eine zweite Ausgestaltung einer erfindungsgemäßen Plane 1 für die Verkleidung einer Frontseite **(****Fig. 2****)** des Laderaums 21 bzw. eine dritte Ausgestaltung einer erfindungsgemäßen Plane 1 für die Verkleidung einer Heckseite **(****Fig. 3****)** des Laderaums 21 jeweils mit Blick auf die Innenseite 11 der Plane 1.

Eine erfindungsgemäße thermisch-isolierende Plane 1 für Nutzfahrzeuge 2 und Wechselbrücken, insbesondere für Mannschaftsfahrzeuge im Bereich Militär, Industrie, technische Hilfe zeichnet sich durch eine Vielzahl von, an einer Innenseite 11 der Plane 1 angeordneten, Isolierelementen 3 aus. Die Position eines jeden Isolierelements 3 auf der Innenseite 11 und die Gestalt eines jeden Isolierelements 3 ist dabei anhand eines zweidimensionalen Plans (2D-Plan) für die Positionierung und Gestalt für, auf der Innenseite 11 der Plane 1 angeordnete, Isolierelemente 3 bestimmt, welcher wiederum auf Basis eines dreidimensionalen Modells (3D-Modell) des Inneren eines Laderaums 21 des jeweiligen Nutzfahrzeugs 2 erstellt ist. In **Fig. 1** ist exemplarisch eine Ausgestaltung einer Plane 1 gezeigt, welche anhand eines 2D-Plans für ein zu verkleidendes Nutzfahrzeugs 2 erstellt wurde, dessen Laderaum 21 beispielsweise eine Sitzbank und ein weiteres bauliches Zubehör, zum Beispiel ein Regal oder eine Werkzeughalterung umfasst, welche nahe der Seitenwände des Laderaums 21 angeordnet sind. Die Position 13 der Sitzbank und die Position 14 des baulichen Zubehörs sind in **Fig. 1** gestrichelt angedeutet. Die hier gezeigte Plane 1 weist darüber hinaus selbst noch zwei Fensterbereiche 12 auf. Der 2D-Plan für die Positionierung und Gestalt für, auf der Innenseite 11 der Plane 1 angeordnete, Isolierelemente 3, welcher auf Basis eines 3D-Modells des Laderaums 21 individuell erstellt wurde, berücksichtigt vorteilhaft all diese baulich vorbestimmten Bereiche der Innenseite 11 der Plane 1 und gibt für den zu isolierenden Teil der Innenseite 11 der Plane 1 sowohl die Position als auch die Gestalt der einzelnen Isolierelemente 3 vor, welche auf der Innenseite 11 angeordnet werden sollen, so dass die Plane 1 optimal thermisch isoliert ist. Bei der Aufstellung des 2D-Plans, können die zu isolierenden Bereiche auf der Innenseite 11 der Plane 1 zudem vorzugsweise derart in Teilbereiche mit Positionierungsparametern und Gestaltsparametern für die Isolierelemente 3 aufgeteilt werden, so dass die von einem einzelnen Isolierelement 3 bedeckte Fläche der Innenseite 11 der Plane 1 höchstens 40 %, bevorzugt 30 %, besonders bevorzugt 20 %, der Gesamtfläche der zu isolierenden Innenseite 11 der Plane 1 beträgt.

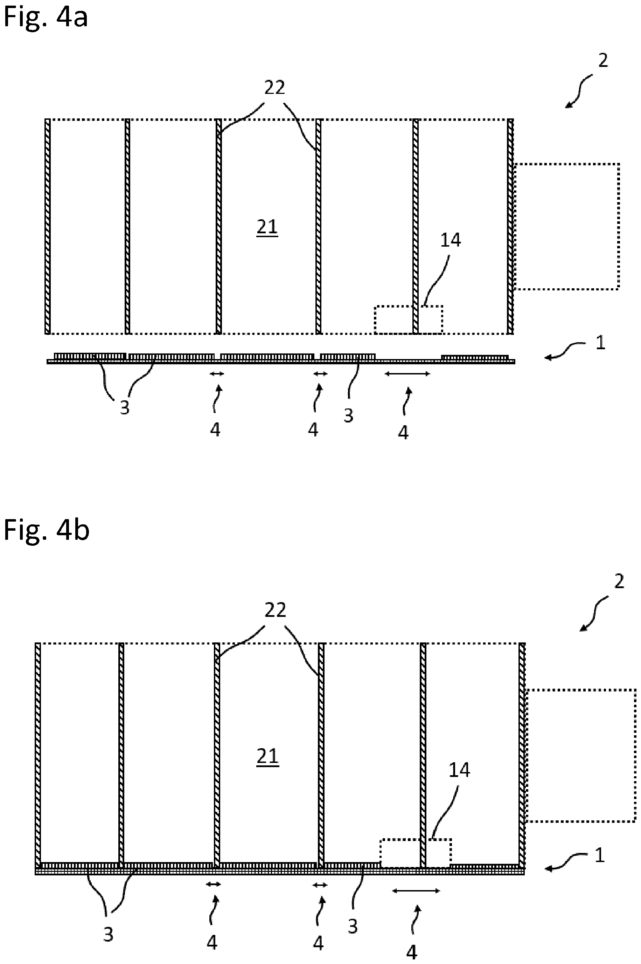

**Fig. 4a** zeigt einen Blick auf den Laderaum 21 eines Nutzfahrzeugs 2 mit einer individuell an besagten Laderaum 21 angepassten, thermisch-isolierenden Plane 1 in unmontiertem Zustand und in **Fig. 4b** in montiertem Zustand. In den Fig. **4a** und **4b** ist gestrichelt ein Nutzfahrzeug 2 mit Laderaum 21 und Fahrerkabine der Zugmaschine (kleines gestricheltes Rechteck ohne Bezugszeichen auf der rechten Seite) angedeutet.

Wie in den **Fig. 1** bis **3** zu sehen, können dabei wenigstens zwei der auf der Plane 1 angeordneten Isolierelementen 3 eine unterschiedliche Gestalt aufweisen. Allgemein können die Isolierelemente 3 nahezu jede beliebige Gestalt aufweisen, wodurch der gesamte, zu isolierende Bereich der Innenseite 11 der Plane 1 vorteilhaft effizient mit Isolierelemente 3 bedeckt werden kann. Zwischen den Isolierelementen 3 sind erfindungsgemäß Faltbereiche 4 ausgebildet, mittels derer die Plane 1 planmäßig faltbar ist. Die Innenseite 11 der Plane 1 kann zudem vorteilhaft in den Faltbereichen 4 durch Vliesmaterial unbedeckt bleiben. Ein jeder Faltbereich 4 ist bevorzugt mindestens 45 mm breit, besonders bevorzugt mindestens 50 mm breit, um eine möglichst gute Faltbarkeit zu gewährleisten. Die Plane 1 weist in diesem Fall dann innerhalb der Faltbereiche 4 lediglich die Dicke des Planen-Materials sowie des innenseitigen Gewebestücks 32 auf, was einerseits die Biegsamkeit der Plane 1 an diesen Stellen vorteilhaft erhöht und andererseits, in montiertem Zustand der Plane 1, vorteilhaft dazu genutzt werden kann, die vergleichsweise dünnen Faltbereiche 4 bezüglich insbesondere der Streben des Spriegels 22 und/oder etwaiger baulicher Gegebenheiten im Inneren des Laderaums 21 auszurichten, so dass die Auskragung der Plane 1 vorteilhaft weiter reduziert wird (vgl. hierzu insb. Fig. **4a** und **4b****).** Die Gewebestücke 32 zweier benachbarter Isolierelemente 3, insbesondere deren Ränder 321, können dabei vorteilhaft den gesamten Faltbereich 4 bedecken. Der Abschnitt des jeweiligen Gewebestücks 32, welcher den Faltbereich 4 auf der Innenseite 11 der Plane 1 bedeckt, kann dabei vorteilhaft als Stabilisierungsmittel des jeweiligen Faltbereichs 4 dienen, wodurch die Lebensdauer der erfindungsgemäßen Plane 1 vorteilhaft erhöht wird.

Die Isolierelemente 3 sind erfindungsgemäß aus wenigstens einem Vliesstück 31 und aus wenigstens einem, korrespondierend zum jeweiligen Vliesstück 31 ausgebildeten Gewebestück 32 gebildet, wobei das Vliesstück 31 und das Gewebestück 32 über jeweils eine ihrer Seiten miteinander flächig in Kontakt sind, sodass das Isolierelement 3 eine Vliesseite 33 und eine Außenseite 34 aufweist. Die einzelnen Isolierelemente 3 sind dann, wenn sie auf der Innenseite 11 der Plane 1 angeordnet werden, mit ihrer Vliesseite 33 in unmittelbarem Kontakt mit der Innenseite 11 der Plane 1. Ein unmittelbarer Kontakt zwischen der Vliesseite 33 und der Innenseite 11 der Plane 1 spart nicht nur vorteilhaft ein weiteres Gewebestück 32 ein, welches benötigt werden würde, um ein "vollständiges Isolierkissen" zu bilden. Der vergleichsweise geringe Wärmeübertrag zwischen Vliesmaterial und Planen-Material erhöht darüber hinaus auch vorteilhaft die Dämmwirkung jedes einzelnen Isolierelements 3. Die Vliesstücke 31 selbst können insbesondere aus einem thermisch-isolierenden Vlies, insbesondere aus einem schwer entflammbaren, feinfaserigen Polyestervlies gebildet sein, wobei die einzelnen Vliesstücke 31 vorzugsweise eine Dicke von 10 bis 40 mm, besonders bevorzugt von 20 mm, aufweisen. Die Gewebestücke 32 werden hingegen bevorzugt aus einem Kunststoff-beschichteten Gewebematerial, insbesondere aus einem mit Polyvinylchlorid (PVC)-beschichtete Polyestergewebe, gebildet.

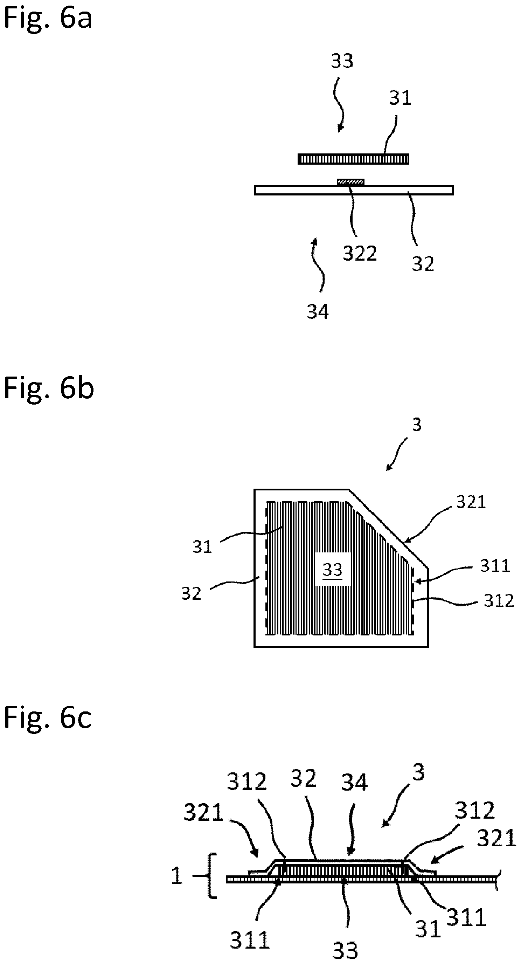

Das Gewebestück 32 eines jeden Isolierelements 3 weist erfindungsgemäß einen zwischen 3 und 15 % größeren Flächeninhalt als das jeweils korrespondierende Vliesstück 31 auf, sodass sich, wenn das Vliesstück 31 mittig auf dem jeweils korrespondierenden Gewebestück 32 platziert wird, ein umlaufender, überstehender Rand 321 aus Gewebematerial bildet, über den das Isolierelement 3 mit der Innenseite 11 der Plane 1 stoffschlüssig verbunden ist. Ein derartiger Rand 321 aus Gewebematerial ist vorzugsweise zwischen 2 und 5 cm breit, wobei der Rand 321 aus Gewebematerial an verschiedenen Seiten eines Isolationselements 3 auch eine unterschiedliche Breite aufweisen kann. In **Fig. 6b** ist exemplarisch ein Isolierelement 3 mit einem umlaufenden Rand 321 aus Gewebematerial dargestellt.

In den Fig. **4a** und **4b** ist eine Ausgestaltung eines Nutzfahrzeugs 2 mit Zugmaschine und Laderaum 21 dargestellt, welches Spriegel 22 in Form von sog. Querspriegeln aufweist, an denen die erfindungsgemäße Plane 1 befestigt werden kann.

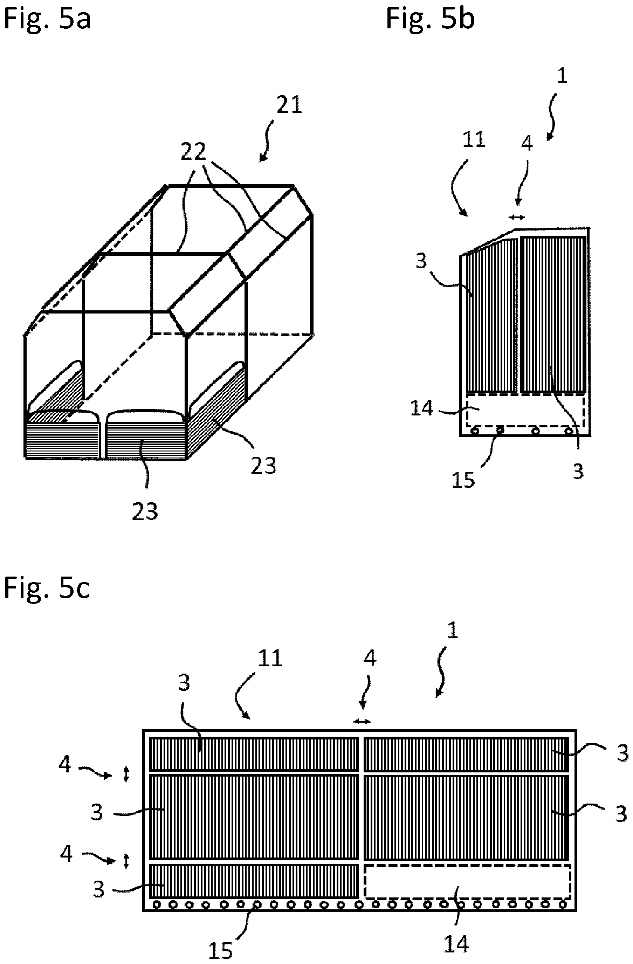

**Fig. 5a** zeigt alternativ dazu eine perspektivische Ansicht eines als Transportcontainer ausgestalteten Laderaums 21 eines Nutzfahrzeugs 2 mit Längsspriegeln. Ein Spriegelaufbau mit Längsspriegeln wird auch als "Hamburger Verdeck" bezeichnet. Transportcontainer, welche reversibel auf Fahrgestellen eines Nutzfahrzeugs 2 bzw. Nutzfahrzeuganhängers angeordnet werden können, werden unter anderem auch als Wechselbrücke, Wechselaufbau oder Wechselbehälter bezeichnet. Sie eignen sich vorzugsweise für den sog. kombinierten Verkehr, bei dem ein Umschlag derartiger Container von einem Landfahrzeug auf die Bahn, auf ein Flugzeug und/oder auf ein Schiff erfolgt. Ein Teil des hier dargestellten Transportcontainers ist zudem mit einem Geländer 23 versehen.

In **Fig. 5b** ist eine Ausgestaltung einer, zu einer Hälfte einer Heckseite des Transportcontainers aus **Fig. 5a** passend ausgestalteten, erfindungsgemäßen Plane 1 mit Blick auf die Innenseite 11 der Plane 1 dargestellt. **Fig. 5b** zeigt also exemplarisch die rechte Seite der Ummantelung der dem Betrachter zugewandten Seite des Transportcontainers aus **Fig. 5a****.** Die entsprechend linke Seite wäre in vorliegendem Fall dann spiegelsymmetrisch zur **Fig. 5b** ausgestaltet. Eine derartige, zweiteilige Abdeckung besagter Heckseite des Transportcontainers ermöglicht vorteilhaft ein Öffnen der Heckseite, wie bei einer Tür. Allgemein kann eine mehrteilige Ausgestaltung der erfindungsgemäßen Plane 1 auch für die Längsseite des Transportcontainers oder auch für die Ummantelung der Ladepritsche bzw. des Laderaums 21 eines Nutzfahrzeugs 2 vorgesehen werden.

**Fig. 5c** zeigt eine Ausgestaltung einer, zu einer Längsseite des Transportcontainers aus **Fig. 5a** passend ausgestalteten, erfindungsgemäßen Plane 1 mit Blick auf die Innenseite 11 der Plane 1. Die Positionen der Isolierelemente 3 sind hier so gewählt, dass die sich bildenden Faltbereiche 4 vorteilhaft den als Längsspriegeln ausgestalteten Spriegeln 22 entsprechen. Sowohl die in Fig. 5b dargestellte Plane 1 für die Heckseite als auch die in Fig. 5c dargestellte Plane 1 für die Längsseite (hier die Beifahrerseite) weisen auf der Innenseite 11 jeweils im unteren Bereich planmäßige Abschnitte und Isolierelemente 3 auf, um der Position 14 eines baulichen Zubehörs, im vorliegenden Fall des Geländers 23, Rechnung zu tragen.

Die **Fig. 6a - 6c** zeigen schließlich verschiedene Zwischenschritte eines Verfahrens zur Herstellung einer erfindungsgemäßen Plane 1.

Bei dem erfindungsgemäßen Verfahren zur Herstellung einer thermisch-isolierenden Plane 1 für Nutzfahrzeuge 2, insbesondere für Mannschaftsfahrzeuge im Bereich Militär, Industrie, technische Hilfe und dergleichen, wird eine Vielzahl von Isolierelementen 3 auf einer Innenseite 11 der Plane 1 angeordnet. Sowohl die Positionierung eines jeden Isolierelements 3 auf der Innenseite 11 der Plane 1 als auch die Auswahl der Gestalt und entsprechende Herstellung der einzelnen Isolierelemente 3, erfolgt dabei anhand eines zweidimensionalen Plans (2D-Plan) für die Positionierung und Gestalt für, auf einer Innenseite 11 einer Plane 1 angeordnete, Isolierelemente 3. Die Aufstellung des 2D-Plans wiederum erfolgt anhand eines dreidimensionalen Modells (3D-Modell) des Inneren eines Laderaums 21 eines Nutzfahrzeugs 2. Zudem werden die Isolierelemente 3 derart auf der Innenseite 11 der Plane 1 positioniert, dass zwischen den einzelnen Isolierelementen 3 Faltbereiche 4 gebildet werden. Diese Faltbereiche 4 können vorteilhaft durch Vliesmaterial und durch Kunststoff-beschichtetes Gewebematerial unbedeckt bleiben, um die Biegsamkeit und damit die Flexibilität der Plane 1 zu erhöhen.

Vor der Anordnung der Isolierkissen 3 auf der Innenseite 11 der Plane 1 (hier nicht gezeigt), können dabei vorzugsweise zunächst alle Modifikationen der Plane 1 selbst, insbesondere Modifikationen der Außenseite der Plane 1, die Verarbeitungsschritte umfassen bei denen Hochfrequenzschweißtechniken und/oder Heißluft-Fügetechniken eingesetzt werden, ausgeführt werden. So können beispielsweise Fenster und Fensterabdeckungen sowie Dokumententaschen und Ähnliches an der Plane 1 angebracht werden.

**Fig. 6a** zeigt exemplarisch die Herstellung eines, entsprechend eines individuellen 2D-Plans gestalteten, Isolierelements 3. Zur Herstellung der Isolierelemente 3 können zunächst anhand des aufgestellten 2D-Plans passgenaue Vliesstücke 31 aus einem thermisch isolierenden Vlies und ebenso anhand des aufgestellten 2D-Plans, korrespondierend zu den Vliesstücken 31 ausgebildete, Gewebestücke 32 aus einem Kunststoff-beschichteten Gewebematerial geschnitten werden. Ein jedes der so erhaltenen Vliesstücke 31 kann dann auf einer Seite des jeweils korrespondierend dazu ausgebildeten Gewebestücks 32 mit Hilfe eines Fixiermittels 322 fixiert werden. Als Fixiermittel 322 können dabei insbesondere ein selbstklebendes Klettband und/oder ein doppelseitiges Klebeband Verwendung finden, wobei das Fixiermittel 322 zur Fixierung des Vliesstücks 31 auf einer Seite des jeweils korrespondierend dazu ausgebildeten Gewebestücks 32 vorzugsweise mittig auf der betreffenden Seite des Gewebestücks 32 angeordnet wird. Jedes derartige aneinander fixierte Paar aus Vliesstück 31 und Gewebestück 32 kann dann entlang wenigstens eines Teils eines Randes 311 des jeweiligen Vliesstücks 31 miteinander vernäht werden, so dass ein Isolierelement 3 mit einer Vliesseite 33 und einer Außenseite 34 entsteht. **Fig. 6b** zeigt eine Ausgestaltung eines derartigen Isolierelements 3 in einer Draufsicht. Im vorliegenden Beispiel verläuft die Naht 312, welche das Vliesstück 31 mit dem korrespondierend ausgebildeten Gewebestück 32 verbindet, entlang des gesamten Randes 311 des Vliesstücks 31.

Zur Herstellung der individuell, an den jeweiligen Verwendungszweck angepassten, thermisch-isolierenden Plane 1, können die Isolierelemente 3 dann vorteilhaft anhand des aufgestellten 2D-Plans auf der Innenseite 11 der Plane 1 positioniert werden, wobei die Isolierelemente 3 mit ihrer Vliesseite 33 in Kontakt mit der Innenseite 11 der Plane 1 treten. **Fig. 6c** zeigt beispielhaft ein, auf einer Plane 1 positioniertes, Isolierelement 3, wobei das Isolierelement 3 in unmittelbarem Kontakt mit der Innenseite 11 der Plane 1 steht. Zur endgültigen Befestigung der Isolierelemente 3 auf der Plane 1 können Isolierelemente 3 schließlich stoffschlüssig mit der Plane 1, insbesondere durch Kleben oder Heißluftschweißen, verbunden werden, was vorteilhaft eine beständige und wasserdichte Befestigung der Isolierelemente 3 an der Innenseite 11 gewährleistet. In **Fig. 6c** ist zu sehen, dass dazu bevorzugt ein jedes, anhand des aufgestellten 2D-Plans, korrespondierend zum jeweiligen Vliesstück 31 ausgebildete Gewebestück 32 derart aus einem Kunststoff-beschichteten Gewebematerial geschnitten werden kann, so dass das Gewebestück 32 einen größeren, vorzugsweise einen zwischen 3 und 15 % größeren, Flächeninhalt als das jeweils korrespondierende Vliesstück 31 aufweist, sodass sich wiederum, wenn das Vliesstück 31 mittig auf dem jeweils korrespondierenden Gewebestück 32 platziert wird, ein umlaufender, überstehender Rand 321 aus Gewebematerial bildet, entlang dessen das jeweilige Isolierelement 3 mit der Plane 1 stoffschlüssig verbunden werden kann.

Die vorliegende Erfindung betrifft eine thermisch-isolierende Plane 1 für Nutzfahrzeuge 2 und Wechselbrücken, insbesondere für Mannschaftsfahrzeuge im Bereich Militär, Industrie, technische Hilfe, sowie ein Verfahren zu deren Herstellung. Die erfindungsgemäße Plane 1 zeichnet sich durch eine Vielzahl von, an einer Innenseite 11 der Plane 1 planmäßig angeordneten und gestalteten Isolierelementen 3 aus, wobei zwischen den Isolierelementen 3 Faltbereiche 4 ausgebildet sind, mittels derer die Plane 1 planmäßig faltbar ist. Sie ermöglicht es vorteilhaft Laderäume 21 bzw. Ladepritschen von Nutzfahrzeugen, angepasst an den jeweiligen Verwendungszweck und die individuellen räumlichen Gegebenheiten im Inneren der Laderäume, thermisch zu isolieren. Dadurch werden Personen, welche in den Laderäumen 21 bzw. auf den Ladepritschen transportiert werden, vorteilhaft vor Hitze, Kälte und anderen Witterungseinflüssen geschützt. Die thermisch-isolierende Plane 1 selbst, gewährleistet dennoch alle Vorteile, wie Flexibilität und einfache Handhabung, gewöhnlicher LKW-Planen und bietet zudem den Vorteil, die Außenmaße eines derart isolierten Nutzfahrzeugs 2 nicht wesentlich zu vergrößern.

### Bezugszeichenliste

- 1: Plane für Nutzfahrzeuge (2)
- 11: Innenseite der Plane (1)
- 12: Fenster
- 13: Position einer Sitzbank
- 14: Position eines baulichen Zubehörs, bspw. eines Regals oder eines Geländers (23)
- 15: Befestigungsösen

- 2: Nutzfahrzeug
- 21: Laderaum
- 22: Spriegel
- 23: Geländer

- 3: Isolierelement
- 31: Vliesstück
- 311: Rand des Vliesstücks (31)
- 312: Naht

- 32: Gewebestück
- 321: Rand des Isolierelements (3) aus überstehendem Gewebematerial
- 322: Fixiermittel

- 33: Vliesseite des Isolierelements (3)

- 34: Außenseite des Isolierelements (3)

- 4: Faltbereich

## Patentansprüche

1. Thermisch-isolierende Plane (1) für Nutzfahrzeuge (2) und Wechselbrücken, insbesondere für Mannschaftsfahrzeuge im Bereich Militär, Industrie, technische Hilfe und dergleichen, **dadurch gekennzeichnet, dass** an einer Innenseite (11) der Plane (1) eine Vielzahl von individuell gestalteten Isolierelementen (3) angeordnet ist,
- wobei die Isolierelemente (3) aus wenigstens einem Vliesstück (31) und aus wenigstens einem, korrespondierend zum jeweiligen Vliesstück (31) ausgebildeten Gewebestück (32) gebildet sind,
- wobei das Vliesstück (31) und das Gewebestück (32) über jeweils eine ihrer Seiten miteinander flächig in Kontakt sind, sodass das Isolierelement (3) eine Vliesseite (33) und eine Außenseite (34) aufweist,
- wobei das Isolierelement (3) mit seiner Vliesseite (311) in unmittelbarem Kontakt mit der Innenseite (11) der Plane (1) ist;
- und wobei das Gewebestück (32) eines jeden Isolierelements (3) einen zwischen 3 und 15 % größeren Flächeninhalt als das jeweils korrespondierende Vliesstück (31) aufweist, sodass sich, wenn das Vliesstück (31) mittig auf dem jeweils korrespondierenden Gewebestück (32) platziert wird, ein umlaufender, überstehender Rand (321) aus Gewebematerial bildet, über den das jeweilige Isolierelement (3) mit der Innenseite (11) der Plane (1) stoffschlüssig verbunden ist;
- wobei die Position eines jeden Isolierelements (3) auf der Innenseite (11) und die Gestalt eines jeden Isolierelements (3) anhand eines zweidimensionalen Plans (2D-Plan) für die Positionierung und Gestalt für, auf der Innenseite (11) der Plane (1) angeordnete, Isolierelemente (3) bestimmt ist,
- wobei der 2D-Plan auf Basis eines dreidimensionalen Modells (3D-Modell) des Inneren eines Laderaums (21) des jeweiligen Nutzfahrzeugs (2) erstellt ist,
- und wobei zwischen den Isolierelementen (3) Faltbereiche (4) ausgebildet sind, mittels derer die Plane (1) planmäßig faltbar ist.

2. Plane (1) nach Anspruch 1, **dadurch gekennzeichnet, dass** die Ränder (321) der Gewebestücke (32) einander benachbarte Isolierelemente (3) um 2,5 cm bis 3,5 cm, bevorzugt um 3,0 cm, miteinander überlappen.

3. Plane (1) nach Anspruch 1 oder 2, **dadurch gekennzeichnet, dass** das Vliesstück (31) aus einem thermisch-isolierenden Vlies, insbesondere aus einem schwer entflammbaren, feinfaserigen Polyestervlies gebildet ist, wobei das Vliesstück (31) vorzugsweise eine Dicke von 10 bis 40 mm, besonders bevorzugt von 20 mm, aufweist.

4. Plane (1) nach einem der Ansprüche 1 bis 3, **dadurch gekennzeichnet, dass** das Gewebestück (32) aus einem Kunststoff-beschichteten Gewebematerial, insbesondere aus einem mit Polyvinylchlorid (PVC)-beschichtete Polyestergewebe, gebildet ist.

5. Verfahren zur Herstellung einer thermisch-isolierenden Plane (1) nach einem der Ansprüche 1 bis 4 für Nutzfahrzeuge (2) und Wechselbrücken, insbesondere für Mannschaftsfahrzeuge im Bereich Militär, Industrie, technische Hilfe und dergleichen, bei dem
- eine Vielzahl von Isolierelementen (3) auf einer Innenseite (11) der Plane (1) angeordnet werden,
- wobei sowohl die Positionierung eines jeden Isolierelements (3) auf der Innenseite (11) der Plane (1) als auch
- die Auswahl der Gestalt und entsprechende Herstellung der einzelnen Isolierelemente (3),
- anhand eines zweidimensionalen Plans (2D-Plan) für die Positionierung und Gestalt für, auf einer Innenseite (11) einer Plane (1) angeordnete, Isolierelemente (3) erfolgt,
- welcher anhand eines dreidimensionalen Modells (3D-Modell) des Inneren eines Laderaums (21) eines Nutzfahrzeugs (2) aufgestellt wird;
- und wobei die Isolierelemente (3) derart auf der Innenseite (11) der Plane (1) positioniert werden, dass zwischen den einzelnen Isolierelementen (3) Faltbereiche (4) gebildet werden.

6. Verfahren nach Anspruch 5, bei dem in einem Verfahrensschritt vor der Anordnung der Isolierkissen (3) auf der Innenseite (11) der Plane (1), zunächst alle Modifikationen der Plane (1) selbst, insbesondere Modifikationen der Außenseite der Plane (1), die Verarbeitungsschritte umfassen bei denen Hochfrequenzschweißtechniken und/oder Heißluft-Fügetechniken eingesetzt werden, ausgeführt werden.

7. Verfahren nach Anspruch 5 oder 6, bei dem die Innenseite (11) der Plane (1) in den Faltbereichen (4) durch Vliesmaterial unbedeckt bleibt, wobei ein jeder Faltbereich (4) bevorzugt mindestens 45 mm breit, besonders bevorzugt mindestens 50 mm breit ist.

8. Verfahren nach einem der Ansprüche 5 bis 7, bei dem zur Herstellung der Isolierelemente (3)
- anhand des aufgestellten 2D-Plans passgenaue Vliesstücke (31) aus einem thermisch-isolierenden Vlies geschnitten werden;
- anhand des aufgestellten 2D-Plans, korrespondierend zu den Vliesstücken (31) ausgebildete, Gewebestücke (32) aus einem Kunststoff-beschichteten Gewebematerial geschnitten werden;
- ein jedes der so erhaltenen Vliesstücke (31) auf einer Seite des jeweils korrespondierend dazu ausgebildeten Gewebestücks (32) mit Hilfe eines Fixiermittels (322) fixiert wird;
- und jedes aneinander fixierte Paar aus Vliesstück (31) und Gewebestück (32) entlang wenigstens eines Teils eines Randes (311) des jeweiligen Vliesstücks (31) miteinander vernäht wird, so dass ein Isolierelement (3) mit einer Vliesseite (33) und einer Außenseite (34) entsteht.

9. Verfahren nach Anspruch 8, bei dem das Fixiermittel (322) ein selbstklebendes Klettband und/oder ein doppelseitiges Klebeband ist, welches zur Fixierung des Vliesstücks (31) auf einer Seite des jeweils korrespondierend dazu ausgebildeten Gewebestücks (32) vorzugsweise in Form von mehreren Stücken von Fixiermittel (322), welche zunächst 9,0 cm bis 11,0 cm, besonders bevorzugt 10,0 cm, von den Außenkanten des jeweiligen Gewebestücks (32) entfernt und dann zur Mitte des Gewebestücks (32) hin gleichmäßig verteilt auf der betreffenden Seite des Gewebestücks (32) angeordnet werden.

10. Verfahren nach einem der Ansprüche 5 bis 9, bei dem
- die Isolierelemente (3) anhand des aufgestellten 2D-Plans auf der Innenseite (11) der Plane (1) positioniert werden,
- wobei die Isolierelemente (3) mit ihrer Vliesseite (33) in Kontakt mit der Innenseite (11) der Plane (1) treten.

11. Verfahren nach einem der Ansprüche 5 bis 10, bei dem die Isolierelemente (3) mit der Plane (1) stoffschlüssig, insbesondere mittels Hochfrequenzschweißen und/oder einem Heißluft-Fügeverfahren oder durch Kleben, verbunden werden, wobei die Reihenfolge der stoffschlüssige Verbindung der Isolierelemente (3) mit der Innenseite (11) der Plane (1) stets so erfolgt, dass Isolierelemente (3), die im Nutzungszustand einem Dach des Nutzfahrzeugs (2) oder der Wechselbrücke näher sind, vor Isolierelementen (3), die einer Ladefläche des Nutzfahrzeugs (2) oder der Wechselbrücke näher sind, stoffschlüssig mit der Innenseite (11) der Plane (1) verbunden werden.

12. Verfahren nach Anspruch 11, bei dem ein jedes, anhand des aufgestellten 2D-Plans, korrespondierend zum jeweiligen Vliesstücken (31) ausgebildete, Gewebestücke (32) derart aus einem Kunststoff-beschichteten Gewebematerial geschnitten wird, dass das Gewebestück (32) einen größeren, vorzugsweise einen zwischen 3 und 15 % größeren, Flächeninhalt als das jeweils korrespondierende Vliesstück (31) aufweist, sodass sich, wenn das Vliesstück (31) mittig auf dem jeweils korrespondierenden Gewebestück (32) platziert wird, ein umlaufender, überstehender Rand (321) aus Gewebematerial bildet, entlang dessen das jeweilige Isolierelement (3) mit der Plane (1) stoffschlüssig verbunden werden kann.

13. Verfahren nach einem der Ansprüche 5 bis 12, bei dem bei der Aufstellung des 2D-Plans, die zu isolierenden Bereiche auf der Innenseite (11) der Plane (1) derart in Teilbereiche mit Positionierungsparametern und Gestaltsparametern für die Isolierelemente (3) aufgeteilt werden, so dass die von einem einzelnen Isolierelement (3) bedeckte Fläche der Innenseite (11) der Plane (1) höchstens 40 %, bevorzugt höchstens 30 %, besonders bevorzugt höchstens 20 %, der Gesamtfläche der zu isolierenden Innenseite (11) der Plane (1) beträgt.

## Claims

1. Thermally insulating tarpaulin (1) for commercial vehicles (2) and swap bodies, in particular for team vehicles in the field of military, industry, technical assistance and the like, **characterised in that** on an inner side (11) of the tarpaulin (1) a plurality of individually designed insulating elements (3) are arranged,
- wherein the insulating elements (3) are formed from at least one fleece piece (31) and from at least one fabric piece (32) formed correspondingly to the respective fleece piece (31),
- wherein the fleece piece (31) and the fabric piece (32) are each in surface contact with one another via one of their sides, so that the insulating element (3) has a fleece side (33) and an outer side (34),
- wherein the insulating element (3) with its fleece side (311) is in direct contact with the inner side (11) of the tarpaulin (1);
- and wherein the fabric piece (32) of each insulating element (3) has an area of between 3 and 15 % larger than the respective corresponding fleece piece (31), so that, when the fleece piece (31) is placed centrally on the respective corresponding fabric piece (32), a circumferential projecting edge (321) of fabric material is formed, via which the respective insulating element (3) is connected in a material-locking manner to the inner side (11) of the tarpaulin (1);
- wherein the position of each insulating element (3) on the inner side (11) and the shape of each insulating element (3) is determined with the aid of a two-dimensional plan (2D plan) for the positioning and shape for insulating elements (3) arranged on the inner side (11) of the tarpaulin (1),
- wherein the 2D plan is created on the basis of a three-dimensional model (3D model) of the interior of a load compartment (21) of the respective commercial vehicle (2),
- and wherein folding areas (4) are formed between the insulating elements (3), by means of which the tarpaulin (1) can be folded in a planned manner.

2. Tarpaulin (1) according to claim 1, **characterised in that** the edges (321) of the fabric pieces (32) overlap together insulating elements (3) adjacent to each other, by 2.5 cm to 3.5 cm, preferably by 3.0 cm.

3. Tarpaulin (1) according to claim 1 or 2, **characterised in that** the fleece piece (31) is formed from a thermally insulating fleece, in particular from a flame-retardant, fine-fibre polyester fleece, wherein the fleece piece (31) preferably has a thickness of 10 to 40 mm, particularly preferably of 20 mm.

4. Tarpaulin (1) according to one of claims 1 to 3, **characterised in that** the fabric piece (32) is formed from a plastic-coated fabric material, in particular from a polyvinyl chloride (PVC)-coated polyester fabric.

5. Method for manufacturing a thermally insulating tarpaulin (1) according to one of claims 1 to 4 for commercial vehicles (2) and swap bodies, in particular for team vehicles in the field of military, industry, technical assistance and the like, in which
- a plurality of insulating elements (3) are arranged on an inner side (11) of the tarpaulin (1),
- wherein the positioning of each insulating element (3) on the inner side (11) of the tarpaulin (1) as well as
- the selection of the shape and corresponding manufacture of the individual insulating elements (3),
- is carried out with the aid of a two-dimensional plan (2D plan) for the positioning and shape for insulating elements (3) arranged on an inner side (11) of a tarpaulin (1),
- which is drawn up with the aid of a three-dimensional model (3D model) of the interior of a load compartment (21) of a commercial vehicle (2);
- and wherein the insulating elements (3) are positioned on the inner side (11) of the tarpaulin (1) in such a way that folding areas (4) are formed between the individual insulating elements (3).

6. Method according to claim 5, in which, in a method step prior to the arrangement of the insulating pads (3) on the inner side (11) of the tarpaulin (1), all modifications of the tarpaulin (1) itself, in particular modifications of the outer side of the tarpaulin (1), which comprise processing steps in which high-frequency welding techniques and/or hot-air joining techniques are used, are carried out initially.

7. Method according to claim 5 or 6, in which the inner side (11) of the tarpaulin (1) remains uncovered by fleece material in the folding areas (4), wherein each folding area (4) is preferably at least 45 mm wide, particularly preferably at least 50 mm wide.

8. Method according to one of claims 5 to 7, in which for the manufacture of the insulating elements (3)
- precisely fitting fleece pieces (31) are cut from a thermally insulating fleece with the aid of the drawn-up 2D plan;
- with the aid of the drawn-up 2D plan, fabric pieces (32) formed correspondingly to the fleece pieces (31) are cut from a plastic-coated fabric material;
- each of the fleece pieces (31) thus obtained is fixed on one side of the respective fabric piece (32) formed correspondingly thereto with the help of a fixing means (322);
- and each pair of fleece piece (31) and fabric piece (32) fixed to one another is sewn together along at least part of an edge (311) of the respective fleece piece (31), so that an insulating element (3) with a fleece side (33) and an outer side (34) is realised.

9. Method according to claim 8, in which the fixing means (322) is a self-adhesive hook-and-loop tape and/or a double-sided adhesive tape, which is used to fix the fleece piece (31) on one side of the fabric piece (32) formed correspondingly thereto in each case, preferably in the form of several pieces of fixing means (322), which are initially 9.0 cm to 11.0 cm, particularly preferably 10.0 cm, away from the outer edges of the respective fabric piece (32) and then arranged evenly distributed towards the centre of the fabric piece (32) on the concerned side of the fabric piece (32).

10. Method according to one of claims 5 to 9, in which
- the insulating elements (3) are positioned on the inner side (11) of the tarpaulin (1) with the aid of the drawn-up 2D plan,
- wherein the insulating elements (3) come into contact with the inner side (11) of the tarpaulin (1) with their fleece side (33).

11. Method according to one of claims 5 to 10, in which the insulating elements (3) are connected to the tarpaulin (1) in a material-locking manner, in particular by means of high-frequency welding and/or a hot-air joining method or by adhesive bonding, wherein the sequence of the material-locking connection of the insulating elements (3) to the inner side (11) of the tarpaulin (1) always being carried out in such a way that insulating elements (3) which are closer to a roof of the commercial vehicle (2) or the swap body in the state of use are connected to the inner side (11) of the tarpaulin (1) in a material-locking manner before insulating elements (3) which are closer to a load area of the commercial vehicle (2) or the swap body.

12. Method according to claim 11, in which each fabric piece (32) formed corresponding to the respective fleece piece (31) with the aid of the drawn-up 2D plan is cut from a plastic-coated fabric material in such a way that the fabric piece (32) has a larger, preferably between 3 and 15 % larger, area than the respective corresponding fleece piece (31) than the respective corresponding fleece piece (31), so that when the fleece piece (31) is placed in the centre of the respective corresponding fabric piece (32), a circumferential, projecting edge (321) of fabric material is formed, along which the respective insulating element (3) can be connected in a material-locking manner to the tarpaulin (1).

13. Method according to one of claims 5 to 12, in which, during the drawing-up of the 2D plan, the areas to be insulated on the inner side (11) of the tarpaulin (1) are divided into partial areas with positioning parameters and shape parameters for the insulating elements (3) in such a way that the area of the inner side (11) of the tarpaulin (1) covered by an individual insulating element (3) is at most 40 %, preferably at most 30 %, particularly preferably at most 20 %, of the total area of the inner side (11) of the tarpaulin (1) to be insulated.

## Revendications

1. Bâche thermiquement isolante (1) pour des véhicules utilitaires (2) et des caisses mobiles, en particulier pour des véhicules de personnel militaires, industriels, d'assistance technique et analogues, **caractérisée en ce qu'**une pluralité d'éléments d'isolation (3) de conception individuelle est agencée sur une face intérieure (11) de la bâche (1),
- les éléments isolants (3) étant formés d'au moins une pièce de non-tissé (31) et d'au moins une pièce de tissu (32) conçue pour correspondre à la pièce de non-tissé (31) respective,
- la pièce de non-tissé (31) et la pièce de tissu (32) étant en contact à plat l'une avec l'autre sur l'un de leurs côtés respectifs, de sorte que l'élément isolant (3) présente un côté non-tissé (33) et un côté extérieur (34),
- l'élément isolant (3) étant, par son côté non-tissé (311), en contact direct avec le côté intérieur (11) de la bâche (1) ;
- et la pièce de tissu (32) de chaque élément isolant (3) présentant une surface supérieure de 3 à 15 % plus grande que celle de la pièce de non-tissé (31) correspondante, de sorte que, lorsque la pièce de non-tissé (31) est placée au centre de la pièce de tissu (32) correspondante, il se forme un bord (321) périphérique, dépassant, en matériau tissé, par lequel l'élément isolant (3) respectif est relié par adhérence de matière à la face intérieure (11) de la bâche (1) ;
- la position de chaque élément isolant (3) sur la face intérieure (11) et la forme de chaque élément isolant (3) étant déterminées en utilisant un plan bidimensionnel (plan 2D) pour le positionnement et la forme des éléments isolants (3) agencés sur la face intérieure (11) de la bâche (1),
- le plan 2D étant établi sur la base d'un modèle tridimensionnel (modèle 3D) de l'intérieur d'un espace de chargement (21) du véhicule utilitaire respectif (2),
- et des zones de pliage (4) étant formées entre les éléments d'isolation (3), au moyen desquelles la bâche (1) est apte à être pliée selon le plan.

2. Bâche (1) selon la revendication 1, **caractérisée en ce que** les bords (321) des pièces de tissu (32) chevauchent les éléments isolants (3) voisins de 2,5 cm à 3,5 cm, de préférence de 3,0 cm.

3. Bâche (1) selon la revendication 1 ou la revendication 2, **caractérisée en ce que** la pièce de non-tissé (31) est formé d'un non-tissé thermiquement isolant, en particulier d'un non-tissé de polyester à fibres fines ignifugé, la pièce de non-tissé (31) ayant de préférence une épaisseur de 10 à 40 mm, de préférence de 20 mm.

4. Bâche (1) selon l'une des revendications 1 à 3, **caractérisée en ce que** la pièce de tissu (32) est formée d'un matériau de tissu revêtu de matière plastique, en particulier d'un tissu de polyester revêtu de chlorure de polyvinyle (PVC).

5. Procédé de fabrication d'une bâche thermiquement isolante (1) selon l'une des revendications 1 à 4 pour des véhicules utilitaires (2) et des caisses mobiles, en particulier pour des véhicules de personnel militaires, industriels, d'assistance technique et analogues, dans lequel
- une pluralité d'éléments isolants (3) sont agencés sur une face intérieure (11) de la bâche (1), les éléments isolants (3) étant réalisés
- tant pour ce qui est du positionnement de chaque élément isolant (3) sur la face intérieure (11) de la bâche (1) que
- pour le choix de la forme et la fabrication correspondante de chaque élément d'isolation (3),
- en utilisant un plan bidimensionnel (plan 2D) pour le positionnement et la forme des éléments d'isolation (3) agencés sur une face intérieure (11) d'une bâche (1),
- qui est établi en utilisant un modèle tridimensionnel (modèle 3D) de l'intérieur d'un espace de chargement (21) d'un véhicule utilitaire (2) ;
- et dans lequel les éléments isolants (3) sont positionnés sur la face intérieure (11) de la bâche (1) de manière à former des zones de pliage (4) entre les différents éléments isolants (3).

6. Procédé selon la revendication 5, dans lequel, dans une étape du procédé précédant la mise en place des coussins isolants (3) sur la face interne (11) de la bâche (1), on réalise tout d'abord toutes les modifications de la bâche (1) elle-même, notamment des modifications sont effectuées sur l'extérieur de la bâche (1), qui comprennent des étapes de traitement dans lesquelles des techniques de soudage haute fréquence et/ou des techniques d'assemblage par air chaud sont utilisées.

7. Procédé selon la revendication 5 ou la revendication 6, dans lequel la face intérieure (11) de la bâche (1) reste non-recouverte par un matériau non-tissé dans les zones de pliage (4), chaque zone de pliage (4) ayant de préférence une largeur d'au moins 45 mm, de manière particulièrement préférée une largeur d'au moins 50 mm.

8. Le procédé selon l'une des revendications 5 à 7, dans lequel, pour la fabrication des éléments isolants (3)
- en utilisant le plan 2D établi, des pièces de non-tissé (31) parfaitement ajustées sont découpées dans un non-tissé thermo-isolant ;
- en utilisant le plan 2D établi, des pièces de tissu (32) formées en correspondance avec les pièces de non-tissé (31) sont découpées dans un matériau de tissu revêtu de matière synthétique ;
- chacune des pièces de non-tissé (31) ainsi obtenues est fixée sur un côté de la pièce de tissu (32) formée en correspondance avec elle à l'aide d'un moyen de fixation (322) ;
- et chaque paire de pièces de non-tissé (31) et de pièces de tissu (32) fixées l'une à l'autre est cousue ensemble le long d'au moins une partie d'un bord (311) de la pièce de non-tissé respective (31), de sorte qu'un élément isolant (3) avec un côté non-tissé (33) et un côté extérieur (34) est formé.

9. Procédé selon la revendication 8, dans lequel le moyen de fixation (322) est une bande auto-agrippante et/ou une bande adhésive double face, qui est utilisée pour fixer la pièce de non-tissé (31) sur un côté de la pièce de tissu (32) formée de manière correspondante, de préférence sous la forme de plusieurs pièces de moyen de fixation (322), qui sont d'abord placés à une distance de 9,0 cm à 11,0 cm, de préférence à 10,0 cm, des bords extérieurs de la pièce de tissu (32) respective et qui sont ensuite répartis uniformément vers le centre de la pièce de tissu (32) sur le côté concerné de la pièce de tissu (32).

10. Procédé selon l'une des revendications 5 à 9, dans lequel
- les éléments isolants (3) sont positionnés sur la face interne (11) de la bâche (1) en utilisant le plan 2D établi,
- les éléments isolants (3) entrant en contact par leur face non-tissée (33) avec la face interne (11) de la bâche (1).

11. Procédé selon l'une des revendications 5 à 10, dans lequel les éléments isolants (3) sont reliés à la bâche (1) par liaison de matière, en particulier au moyen d'un soudage à haute fréquence et/ou d'un procédé d'assemblage à l'air chaud ou par collage, l'ordre de la liaison de matière des éléments isolants (3) avec la face intérieure (11) de la bâche (1) étant toujours réalisé de telle manière que les éléments isolants (3) qui, à l'état d'utilisation, sont plus proches d'un toit du véhicule utilitaire (2) ou de la caisse mobile, sont reliés par liaison de matière avec la face intérieure (11) de la bâche (1) avant les éléments isolants (3) qui sont plus proches d'une surface de chargement du véhicule utilitaire (2) ou de la caisse mobile.

12. Procédé selon la revendication 11, dans lequel chaque pièce de tissu (32) formée en utilisant le plan 2D établi et correspondant aux pièces de non-tissé respectives (31) est découpée dans un matériau de tissu enduit de matière plastique de telle sorte que la pièce de tissu (32) présente une surface supérieure, de préférence une surface de 3 à 15 % plus grande, que la pièce de non-tissé (31) correspondante, de sorte que, lorsque la pièce de non-tissé (31) est placée au milieu de la pièce de tissu (32) correspondante, il soit formé un bord (321) périphérique, dépassant, en matériau tissé, le long duquel l'élément isolant (3) respectif est apte à être relié à la bâche (1) par liaison de matière.

13. Procédé selon l'une des revendications 5 à 12, dans lequel, lors de l'établissement du plan 2D, les zones à isoler sur la face intérieure (11) de la bâche (1) sont divisées en zones partielles avec des paramètres de positionnement et des paramètres de forme pour les éléments isolants (3), de sorte que la surface de la face intérieure (11) de la bâche (1) recouverte par un seul élément isolant (3) représente au maximum 40 %, de préférence au maximum 30 %, de manière particulièrement préférée au maximum 20 %, de la surface totale de la face intérieure (11) à isoler de la bâche (1).
